# EUROPÄISCHE PATENTSCHRIFT

(11) **EP 3 090 618 B1**
(45) Veröffentlichungstag und Bekanntmachung des Hinweises auf die Patenterteilung: **22.08.2018**
(21) Anmeldenummer: 16155138.7
(22) Anmeldetag: 11.02.2016
(51) Int. Cl.: A01D 43/10, B02C 4/08

(54) **NACHZERKLEINERUNGSVORRICHTUNG**
FINE CRUSHING DEVICE
DISPOSITIF DE BROYAGE SECONDAIRE

(30) Priorität: 04.05.2015 DE 102015005574
(43) Veröffentlichungstag der Anmeldung: 09.11.2016
(73) Patentinhaber: CLAAS Saulgau GmbH, 88348 Bad Saulgau (DE)
(72) Erfinder: Laumeier, Ludger, 33397 Rietberg (DE)

(56) Entgegenhaltungen:
- DE-A1- 10 151 246
- DE-A1- 19 850 534

## Beschreibung

Die vorliegende Erfindung betrifft eine Nachzerkleinerungsvorrichtung für gehäckseltes Erntegut, insbesondere zum Einsatz in einem Feldhäcksler.

DE 198 50 534 A1 offenbart eine Konditioniereinrichtung für Häckselgut mit wenigstens zwei gegensinnig angetriebenen Konditionierwalzen, deren Rotationsachsen parallel zueinander ausgerichtet sind und die über ihre Breite gesehen aus abwechselnd Erhebungen und Täler bildenden Teilabschnitten bestehen, wobei deren Erhebungen in die Täler wenigstens einer anderen Konditionierwalze ragen und jeder Teilabschnitt als rotationssymmetrischer Körper ausgebildet ist, der auf der einen Seite einen wesentlich größeren Durchmesser als auf der anderen Seite aufweist, die eine Konditionierwalze bildenden Teilabschnitte mit ihren großen Seitenflächen an den kleinen Seitenflächen der benachbarten Teilabschnitte anliegen, die Umfangsflächen der Teilabschnitte sich gegenüberstehender Konditionierwalzen zueinander einen Spalt aufweisen, der kleiner ist als die im Häckselgut enthaltenen Körner, und die großen Seitenflächen der Teilabschnitte zusammenwirkender Konditionierwalzen wenigstens bereichsweise einen Scher- bzw. Schneidspalt bilden.

DE 101 51 246 A1 offenbart eine Nachzerkleinerungseinrichtung nach dem Oberbegriff von Anspruch 1.

Eine weitere Nachzerkleinerungsvorrichtung bzw. ein Feldhäcksler, der mit einer solchen Nachzerkleinerungsvorrichtung ausgestattet ist, sind aus EP 2 823 702 A1 bekannt. Diese herkömmliche Nachzerkleinerungsvorrichtung umfasst eine erste und eine zweite Walze, deren Umfangsflächen jeweils durch mehrere entlang einer Drehachse aufgereihte kegelstumpfförmige Abschnitte gebildet sind. Dabei wechseln sich entlang einer Walze jeweils Abschnitte mit großem Durchmesser und solche mit kleinem Durchmesser gegenseitig ab, und jedem Abschnitt der einen Walze liegt ein Abschnitt mit jeweils anderem Durchmesser der anderen Walze gegenüber, so dass der Zerkleinerungsspalt zwischen den Walzen in viele gegeneinander versetzte Abschnitte zerfällt.

Um das Erntegut beim Durchgang durch den Zerkleinerungsspalt zu zerreiben, müssen die sich beiderseits des Zerkleinerungsspalts gegenüberliegenden Oberflächen der beiden Walzen mit unterschiedlichen Geschwindigkeiten bewegen. Zu diesem Zweck rotieren die zwei Walzen mit unterschiedlichen Drehzahlen.

Das Zerreiben des Ernteguts zwischen den Walzen ist notwendig, insbesondere um im Erntegut enthaltene Körner zu zerkleinern, damit der Nährstoffgehalt des Ernteguts z.B. von Vieh, das damit gefüttert wird, gut ausgenutzt werden kann. Im Interesse eines wirtschaftlichen Betriebs sollte die für einen gegebenen Zerkleinerungsgrad des Ernteguts benötigte Menge an Antriebsenergie möglichst niedrig sein.

Aufgabe der Erfindung ist daher, eine Nachzerkleinerungsvorrichtung zu schaffen, die eine energieeffiziente Zerkleinerung ermöglicht.

Die für den Zerkleinerungserfolg ausschlaggebende Differenz der Umfangsgeschwindigkeiten ist bei der herkömmlichen Nachzerkleinerungsvorrichtung an einem Abschnitt des Zerkleinerungsspalts, an dem ein Abschnitt mit großem Durchmesser der langsam rotierenden Walze mit einem Abschnitt mit kleinem Durchmesser der schnell rotierenden Walze zusammenwirkt, deutlich kleiner als an einem Spaltabschnitt, an dem ein Abschnitt mit großem Durchmesser der schnell rotierenden Walze mit einem Abschnitt mit kleinem Durchmesser der langsam rotierenden Walze zusammenwirkt. Entsprechend den unterschiedlichen Geschwindigkeitsdifferenzen sind auch die Zerkleinerungsgrade unterschiedlich, und eine ausreichende Zerkleinerung über alle Abschnitte des Zerkleinerungsspalts hinweg kann nur sichergestellt werden, wenn an denjenigen Abschnitten des Zerkleinerungsspalts, an denen die Geschwindigkeitsdifferenz groß ist, unnötig viel Energie für eine sehr feine Zerkleinerung aufgewandt wird.

Die vorliegende Erfindung beseitigt diesen Nachteil, indem bei einer Nachzerkleinerungsvorrichtung für gehäckseltes Erntegut mit einer ersten Walze und einer zweiten Walze, die einen Zerkleinerungsspalt begrenzen und jeweils wenigstens mehrere entlang einer Drehachse aufgereihte kegelstumpfförmige Abschnitte eines ersten und eines zweiten Typs umfassen, wobei die die Abschnitte des ersten Typs sich in ihrem Durchmesser von den Abschnitten des zweiten Typs unterscheiden, die Abschnitte des ersten Typs sämtlich an der ersten Walze und die Abschnitte des zweiten Typs sämtlich an der zweiten Walze angeordnet sind. Auf diese Weise werden die Schwankungen der Geschwindigkeitsdifferenz entlang des Zerkleinerungsspalts minimiert, so dass eine unnötig feine, energieaufwändige Zerkleinerung auf Teilen des Zerkleinerungsspalts vermieden werden kann.

Wenn die Drehzahl der ersten Walze niedriger als die der zweiten Walze ist, dann kann die daraus resultierende Differenz der Umfangsgeschwindigkeiten von erster und zweiter Walze noch vergrößert werden, in dem die Abschnitte des ersten Typs jeweils kleinere Durchmesser als die Abschnitte des zweiten Typs aufweisen.

Um auch andere, nicht erfindungsgemäße Anordnungen von Abschnitten auf den Walzen sinnvoll realisieren zu können, ist es zweckmäßig, wenn die Abschnitte des ersten Typs an ihrer großen Grundfläche denselben Durchmesser aufweisen wie die Abschnitte des zweiten Typs an ihrer kleinen Grundfläche.

Wenn die kegelmantelförmigen Umfangsflächen von zwei Abschnitten der ersten und zweiten Walze miteinander wechselwirken, um Erntegut zu zerkleinern, dann resultiert daraus auch jeweils eine in Richtung der Drehachsen der Walzen orientierte Kraft. Um die Lager der Walzen zu entlasten, sind die Abschnitte der zwei Walzen in Bezug auf eine zu ihren Drehachsen senkrechte Symmetrieebene spiegelsymmetrisch angeordnet, so dass die in axialer Richtung wirkenden Kräfte einander kompensieren. Erfindungsgemäß sind die Abschnitte so angeordnet, dass außerhalb der Symmetrieebene jeweils eine große Grundfläche eines Abschnitts an einer kleinen Grundfläche eines benachbarten Abschnitts derselben Walze anliegt. So wird an jeder Grenze zwischen zwei Abschnitten eine Schnittkante geschaffen, die ihrerseits zur Zerkleinerung des Ernteguts beiträgt.

Wenn eine solche Schnittkante nicht benötigt wird, könnte der Antriebsenergiebedarf der Nachzerkleinerungsvorrichtung dadurch verringert werden, dass zwei benachbarte Abschnitte derselben Walze sich entweder mit ihren großen Grundflächen oder mit ihren kleinen Grundflächen berühren.

Einer Zwischenlösung zu Folge berührt jeder zwischen zwei benachbarten Abschnitten angeordnete Abschnitt einer Walze zwei untereinander gleich große Grundflächen der zwei benachbarten Abschnitte. Bei einem solchen Aufbau ist nur an jeder zweiten Grenze zwischen zwei Abschnitten eine Schnittkante vorhanden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines Feldhäckslers mit einer Nachzerkleinerungsvorrichtung gemäß der vorliegenden Erfindung;
- Fig. 2: eine perspektivische Ansicht eines der kegelstumpfförmigen Abschnitte einer Walze der erfindungsgemäßen Nachzerkleinerungsvorrichtung;
- Fig. 3: eine Ansicht eines kegelstumpfförmigen Abschnitts gemäß einer Abwandlung;
- Fig. 4: einen schematischen Schnitt durch die Nachzerkleinerungsvorrichtung gemäß einer ersten Ausgestaltung der Erfindung;
- Fig. 5: einen zu Fig. 4 analogen Schnitt gemäß einer zweiten Ausgestaltung, die nicht Teil der beanspruchten Erfindung ist;
- Fig. 6: einen zu Fig. 4 analogen Schnitt gemäß einer dritten Ausgestaltung; und
- Fig. 7: einen zu Fig. 4 analogen Schnitt gemäß einer vierten Ausgestaltung, die nicht Teil der beanspruchten Erfindung ist.

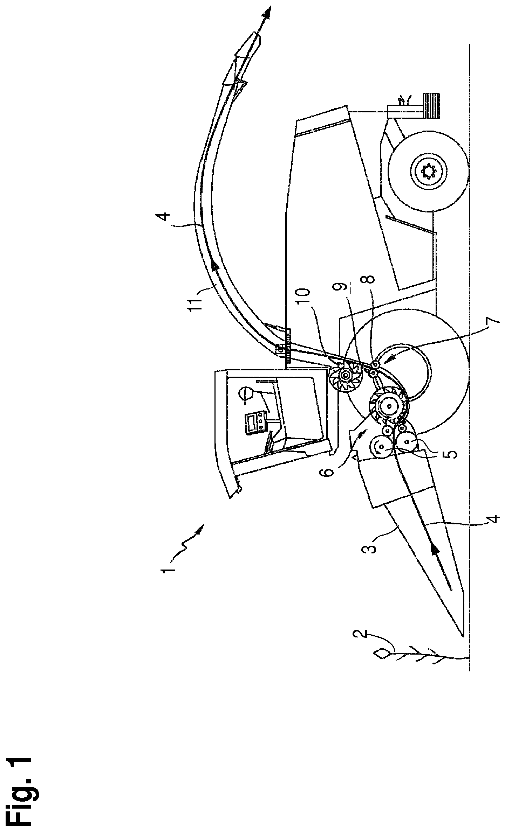

In Fig. 1 ist beispielhaft ein selbstfahrender Feldhäcksler 1 in schematischer Seitenansicht dargestellt. Der Feldhäcksler 1 hat ein Fahrgestell mit Vorder- und Hinterrädern und einen Hauptantriebsmotor, um zum Abernten eines Bestandes von Pflanzen 2 über ein Feld zu fahren. Mittels eines frontseitig angebauten Erntevorsatzes 3 werden die Pflanzen 2 aufgenommen, um anschließend in Form eines Stroms von Erntegut 4, angedeutet durch eine durchgehende, mit Pfeilen versehene Linie, durch den Feldhäcksler 1 gefördert und dabei von verschiedenen Aggregaten bearbeitet zu werden. Zu diesen Aggregaten gehören insbesondere zwei Einzugwalzen 5, ein Häckselaggregat 6, eine Nachzerkleinerungsvorrichtung 7 und ein Auswurfbeschleuniger 10.

Die Einzugwalzen 5 pressen am Ausgang des Erntevorsatzes 3 das Erntegut 4 zu einer flachen Schicht zusammen, um dessen Einführung in das Häckselaggregat 6 zu erleichtern. In diesem wird das Erntegut 4 von einer rotierenden, mit Messern besetzten Häckseltrommel und einer Gegenschneide in kleine Partikel gehäckselt. Durch einen hinter dem Häckselaggregat 6 aufsteigenden Förderschacht gelangt das gehäckselte Erntegut 4 zu der Nachzerkleinerungsvorrichtung 7. Diese umfasst im Wesentlichen zwei gegenläufig rotierend angetriebene, gegeneinander vorgespannte Walzen 8, 9 mit zueinander parallelen Drehachsen. Wenn das Erntegut 4 Mais ist, dient der Durchgang durch die Nachzerkleinerungsvorrichtung 7 insbesondere der Aufschließung von beim Durchgang durch das Häckselaggregat 6 intakt gebliebenen Maiskörnern, wodurch sich die Verdaulichkeit des späteren Futters für Tiere oder die Verwendbarkeit des Ernteguts für die Biogaserzeugung verbessert.

Nach Passieren der Nachzerkleinerungsvorrichtung 7 gelangt das Erntegut 4 schließlich in den Wirkungsbereich des Auswurfbeschleunigers 10, welcher das Erntegut 4 vor dem Eintritt in einen Auswurfkrümmer 11 nochmals beschleunigt, um eine sichere Förderung durch den Auswurfkrümmer 11 und die Überladung auf ein Transportfahrzeug zu gewährleisten.

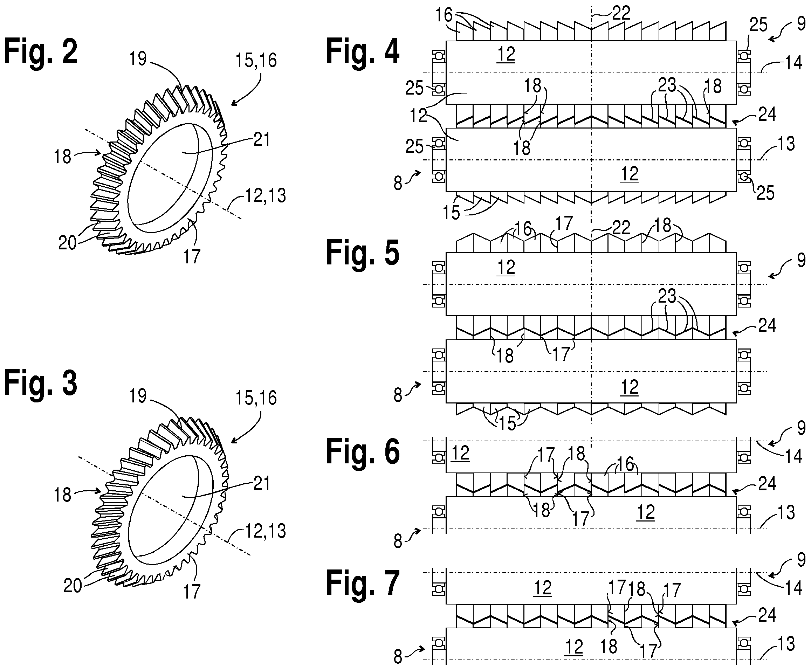

Die Walzen 8, 9 umfassen jeweils, wie zum Beispiel in Fig. 4 zu erkennen, einen starren Walzenkern 12 und eine Mehrzahl von auf dem Walzenkern 12 entlang dessen Drehachse 13 bzw. 14 drehfest aufgereihter kegelstumpfförmiger Abschnitte 15 bzw. 16, von denen einer in Fig. 2 in einer perspektivischen Ansicht gezeigt ist.

Jeder Abschnitt 15, 16 hat eine - in der Darstellung der Fig. 2 dem Betrachter zugewandte - kleine Grundfläche 17, eine in Fig. 2 vom Betrachter abgewandte große Grundfläche 18 und eine Umfangsfläche 19, in der, ähnlich einem kegelförmigen Zahnrad, Rillen 20 ausgespart sind. Diese Rillen 20 können sich in einer von der Drehachse 13, 14 und einem Radius aufgespannten Ebene erstrecken, oder sie können, gemäß der in Fig. 3 gezeigten Variante, schräg zu einer solchen Ebene orientiert sein.

Die Rillen 20 dienen der Steigerung der Reibung an der Oberfläche der Abschnitte 15, 16, so dass das Erntegut 4 leichter in den Zerkleinerungsspalt zwischen den Walzen 8, 9 hineingezogen wird. Die Tiefe der Rillen 20 ist in Fig. 2 und 3 übertrieben dargestellt; in der Praxis sollten die Rillen 20 flach genug sein, damit ein Maiskorn nicht in einer Rille den Zerkleinerungsspalt intakt passieren kann.

Es gibt zwei Typen von Abschnitten, Abschnitte 15 eines ersten Typs mit kleinerem Außendurchmesser, und Abschnitte 16 eines zweiten Typs mit größerem Außendurchmesser. Die Durchmesser einer zentralen Öffnung 21 sind bei beiden Typen von Abschnitten 15, 16 gleich, so dass jeder Abschnitt 15, 16 wahlweise auf dem Walzenkern 12 der Walze 8 oder der Walze 9 montiert werden kann. Der Durchmesser der großen Grundfläche 18 eines Abschnitts 15 kann gleich dem Durchmesser der kleinen Grundfläche 17 an einem Abschnitt 16 gewählt sein, so dass die Abschnitte 15, 16 und Walzenkerne 12 wenn gewünscht auch zu Walzen mit der aus EP 2 823 702 A1 bekannten Gestalt zusammengefügt werden können, bei der auf einer Walze Abschnitte 15 des ersten Typs und Abschnitte 16 des zweiten Typs abwechselnd angeordnet sind und zwei auf einer gleichen Walze benachbarte Abschnitte sich jeweils mit ihren großen Grundflächen 18 oder mit ihren kleinen Grundflächen 17 berühren. Zwei sich gegenüberliegende Abschnitte 15, 16 der Walzen 8, 9 begrenzen jeweils einen Abschnitt 23 eines sägezahnförmig zwischen den Drehachsen 13, 14 verlaufenden Zerkleinerungsspalts 24.

Bei den Walzen 8, 9 gemäß der in Fig. 4 gezeigten ersten Ausgestaltung der Erfindung sind die Abschnitte 15 des ersten Typs mit kleinem Durchmesser sämtlich an der Walze 8 und die Abschnitte 16 mit großem Durchmesser an der Walze 9 versammelt. Der Abstand des Zerkleinerungsspalts 24 von den Drehachsen 13, 14 schwankt daher weniger als bei einem Aufbau, wo jede Walze Abschnitte beider Typen 15, 16 trägt.

Wie groß die Umfangsgeschwindigkeitsdifferenz zwischen sich gegenüberliegenden Oberflächenbereichen der zwei Walzen 8, 9 sein sollte, hängt von den Anforderungen an die Feinheit der Nachzerkleinerung, dem Durchmesser der Walzen und anderen Faktoren ab. Wenn man annimmt, dass die Umfangsgeschwindigkeit der Walze 9 um wenigstens 30% schneller laufen sollte als die der Walze 8, dann muss, wenn die kleine Grundfläche 17 des Abschnitts 16 und die große Grundfläche des Abschnitts 15 denselben Durchmesser von z.B. 245 mm haben, die Drehzahl der Walze 9 um 30% höher sein als die der Walze 8. Dort, wo sich hingegen eine kleine Grundfläche 17 des Abschnitts 15 mit einem Durchmesser von z.B. 226 mm und eine große Grundfläche 18 des Abschnitts 16 mit einem Durchmesser von 264 mm gegenüberliegen, vergrößert sich der Unterschied zwischen den Umfangsgeschwindigkeiten auf ca. 50%. Bei einem herkömmlichen Aufbau der Walzen, bei dem Abschnitte beider Typen an jeder Walze vorhanden sind, muss die Geschwindigkeitsdifferenz von 30% dort erreicht werden, wo sich eine kleine Grundfläche 17 eines Abschnitts 15 der schnelleren Walze 9 und eine große Grundfläche 18 eines Abschnitts 16 der langsameren Walze 8 gegenüberliegen, was einen Drehzahlunterschied von 50% erfordert und zu einer Umfangsgeschwindigkeitsdifferenz von bis zu 70% führt. Die Vermeidung so hoher Umfangsgeschwindigkeitsdifferenzen erlaubt einen energieeffizienten Betrieb der erfindungsgemäßen Nachzerkleinerungsvorrichtung 7.

Die Nachzerkleinerungsvorrichtung 7 ist spiegelsymmetrisch bezüglich einer zu den Drehachsen 13, 14 senkrechten Symmetrieebene 22 aufgebaut. In dieser Symmetrieebene 22 berühren die Abschnitte 15 einander jeweils mit ihren großen Grundflächen 18 und die Abschnitte 16 mit ihren kleinen Grundflächen 17; außerhalb der Symmetrieebene 22 liegt jeweils eine kleine Grundfläche 17 eines Abschnitts 15 oder 16 an der großen Grundfläche eines an derselben Walze benachbarten Abschnitts an. Durch den symmetrischen Aufbau ist sichergestellt, dass in Richtung der Drehachsen 13, 14 orientierte Kraftkomponenten, die jeweils zwischen zwei sich gegenüberliegenden Abschnitten 15, 16 verschiedener Walzen 8, 9 und dem durch den dazwischenliegenden Spaltabschnitt 23 hindurch geförderten Erntegut auftreten, einander ausgleichen, so dass Wälzlager 25, in denen die Walzen 8, 9 gehalten sind, im Wesentlichen nur in radialer Richtung belastet werden.

Außerhalb der Symmetrieebene 22 überlappt jede große Grundfläche 18 eines Abschnitts 15 der Walze 8 mit einer großen Grundfläche eines in axialer Richtung benachbarten Abschnitts 16 der Walze 9, und Erntegut, das in der Ebene dieser beiden Grundflächen 18 den Zerkleinerungsspalt 24 erreicht, wird entweder zur Seite abgelenkt oder von den überlappenden Abschnitten 15, 16 zerschnitten. Da jede Walze 8, 9 nur Abschnitte 15, 16 einer gleichen Größe trägt, kann das Erntegut, bevor es abgelenkt oder geschnitten wird, bis nah an den Zerkleinerungsspalt 24 vorrücken, so dass es effizient aufgenommen und durch den Spalt hindurch gezogen wird. Die Notwendigkeit, das Erntegut beim Durchgang durch den Zerkleinerungspalt 24 nochmals zu schneiden, kann je nach Art des Ernteguts 4 und Einstellung des Häckselaggregats 6 unterschiedlich sein. Bei der in Fig. 4 gezeigten Ausgestaltung bildet außerhalb der Symmetrieebene 22 jede Kontaktfläche zwischen zwei Abschnitten 15 bzw. 16 eine Schneidkante. Wenn keine Schneidwirkung erwünscht ist, können die Abschnitte 15, 16 bei einer nicht erfindungsgemäßen Ausgestaltung wie in Fig. 5 gezeigt auf den Walzenkernen 12 angeordnet werden. Hier liegen einander an jeder Walze 8, 9 jeweils gleich große Grundflächen 17 oder 18 der darauf montierten Abschnitte 15, 16 gegenüber, so dass das Erntegut beim Durchgang durch den Zerkleinerungspalt 24 allenfalls zwischen den unterschiedlich schnell rotierenden Oberflächen der Walzen 8, 9 zerrieben, aber nicht geschnitten wird.

Zwischenlösungen sind möglich, wie zum Beispiel in Fig. 6 und Fig. 7 gezeigt. In Fig. 6 folgt auf jede Grenze zwischen benachbarten Abschnitten 15 oder 16, an der sich gleich große Grundflächen gegenüberliegen, eine Grenze, an der sich eine große und eine kleine Grundfläche 18 bzw. 17 einander berühren und somit eine Schneidkante gebildet wird. In Fig. 7 liegen sich an jeweils zwei Grenzen zwischen benachbarten Abschnitten 15, 16 gleich große Grundflächen gegenüber, während an jeder dritten Grenze eine große und eine kleine Grundfläche einander berühren, um eine Schneidkante zu bilden. Es liegt auf der Hand, dass verschieden große Grundflächen sich auch jeweils an jeder vierten oder allgemein n-ten Grenze zwischen zwei Abschnitten gegenüberliegen könnten, so dass der Abstand zwischen Schneidkanten weitgehend beliebig eingestellt werden kann.

### Bezugszeichen

- 1: Feldhäcksler
- 2: Pflanze
- 3: Erntevorsatz
- 4: Erntegut
- 5: Einzugwalze
- 6: Häckselaggregat
- 7: Nachzerkleinerungsvorrichtung
- 8: Walze
- 9: Walze
- 10: Auswurfbeschleuniger
- 11: Auswurfkrümmer
- 12: Walzenkern
- 13: Drehachse
- 14: Drehachse
- 15: Abschnitt
- 16: Abschnitt
- 17: kleine Grundfläche
- 18: große Grundfläche
- 19: Umfangsfläche
- 20: Rille
- 21: Öffnung
- 22: Symmetrieebene
- 23: Abschnitt
- 24: Zerkleinerungsspalt
- 25: Wälzlager

## Patentansprüche

1. Nachzerkleinerungsvorrichtung (7) für gehäckseltes Erntegut mit einer ersten Walze (8) und einer zweiten Walze (9), die einen Zerkleinerungsspalt (24) begrenzen und jeweils wenigstens mehrere entlang einer Drehachse (13, 14) aufgereihte kegelstumpfförmige Abschnitte (15, 16) eines ersten und eines zweiten Typs umfassen, die sich in ihren Durchmessern unterscheiden, wobei die Abschnitte (15) des ersten Typs sämtlich an der ersten Walze (8) und die Abschnitte des zweiten Typs (16) sämtlich an der zweiten Walze (9) angeordnet sind und die Abschnitte (15, 16) in Bezug auf eine zu den Drehachsen (13, 14) senkrechte Symmetrieebene (22) spiegelsymmetrisch angeordnet sind, **dadurch gekennzeichnet, dass** außerhalb der Symmetrieebene (22) jeweils eine große Grundfläche (18) eines Abschnitts (15, 16) an einer kleinen Grundfläche (17) eines benachbarten Abschnitts (15, 16) anliegt.

2. Nachzerkleinerungsvorrichtung nach Anspruch 1, **dadurch gekennzeichnet, dass** die Abschnitte (15) des ersten Typs kleinere Durchmesser als die Abschnitte (16) des zweiten Typs aufweisen und die Drehzahl der ersten Walze (8) niedriger als die der zweiten Walze (9) ist.

3. Nachzerkleinerungsvorrichtung nach Anspruch 2, **dadurch gekennzeichnet, dass** die Abschnitte (15) des ersten Typs an ihrer großen Grundfläche (18) denselben Durchmesser aufweisen wie die Abschnitte (16) des zweiten Typs an ihrer kleinen Grundfläche (17).

4. Nachzerkleinerungsvorrichtung nach einem der Ansprüche 1 bis 3, **dadurch gekennzeichnet, dass** zwei benachbarte Abschnitte (15, 16) sich entweder mit ihren großen Grundflächen (18) oder mit ihren kleinen Grundflächen (17) berühren.

5. Nachzerkleinerungsvorrichtung nach einem der Ansprüche 1 bis 3, **dadurch gekennzeichnet, dass** wenigstens ein zwischen zwei benachbarten Abschnitten (15, 16) angeordneter Abschnitt (15, 16) zwei untereinander gleich große Grundflächen (17, 18) der zwei benachbarten Abschnitte (15, 16) berührt.

## Claims

1. A post-comminuting apparatus (7) for chopped crop material comprising a first roller (8) and a second roller (9) which define a comminuting gap (24) and respectively include at least a plurality of frustoconical portions (15, 16) arranged in a row along an axis of rotation (13, 14) and of a first and a second type which differ in their diameters, wherein the portions (15) of the first type are all arranged at the first roller (8) and the portions of the second type (16) are all arranged at the second roller (9) and the portions (15, 16) are arranged in mirror-symmetrical relationship in relation to a plane of symmetry (22) which is perpendicular to the axes of rotation (13, 14), **characterised in that** outside the plane of symmetry (22) a large base surface (18) of a portion (15) respectively bears against a small base surface (17) of an adjacent portion (15, 16).

2. A post-comminuting apparatus according to claim 1 **characterised in that** the portions (15) of the first type are of smaller diameters than the portions (16) of the second type and the speed of rotation of the first roller (8) is lower than that of the second roller (9).

3. A post-comminuting apparatus according to claim 2 **characterised in that** the portions (15) of the first type at their large base surface (18) are of the same diameter as the portions (16) of the second type at their small base surface (17).

4. A post-comminuting apparatus according to one of claims 1 to 3 **characterised in that** two adjacent portions (15, 16) are in contact with each other either with their large base surfaces (18) or with their small base surfaces (17).

5. A post-comminuting apparatus according to one of claims 1 to 3 **characterised in that** at least one portion (15, 16) arranged between two adjacent portions (15, 16) is in contact with two base surfaces (17, 18) which are of the same size with each other of the two adjacent portions (15, 16).

## Revendications

1. Dispositif de broyage secondaire (7) pour du produit de récolte haché, comprenant un premier rouleau (8) et un deuxième rouleau (9), lesquels délimitent un interstice de broyage (24) et comportent chacun au moins plusieurs portions tronconiques (15, 16) d'un premier et d'un second type qui sont alignées selon un axe de rotation (13, 14) et qui se différencient par leur diamètre, les portions (15) du premier type étant toutes disposées sur le premier rouleau (8) et les portions du second type (16) étant toutes disposées sur le deuxième rouleau (9), et les portions (15, 16) étant disposées selon une symétrie spéculaire par rapport à un plan de symétrie (22) perpendiculaire aux axes de rotation (13, 14), **caractérisé en ce que**, en dehors du plan de symétrie (22), une grande surface de base (18) d'une portion (15, 16) est à chaque fois en contact avec une petite surface de base (17) d'une portion voisine (15, 16).

2. Dispositif de broyage secondaire selon la revendication 1, **caractérisé en ce que** les portions (15) du premier type présentent des diamètres inférieurs à ceux des portions (16) du second type, et la vitesse de rotation du premier rouleau (8) est inférieure à celle du deuxième rouleau (9).

3. Dispositif de broyage secondaire selon la revendication 2, **caractérisé en ce que** les portions (15) du premier type présentent le même diamètre au niveau de leur grande surface de base (18) que les portions (16) du second type au niveau de leur petite surface de base (17).

4. Dispositif de broyage secondaire selon une des revendications 1 à 3, **caractérisé en ce que** deux portions voisines (15, 16) se touchent soit par leurs grandes surfaces de base (18), soit par leurs petites surfaces de base (17).

5. Dispositif de broyage secondaire selon une des revendications 1 à 3, **caractérisé en ce qu'**au moins une portion (15, 16) disposée entre deux portions voisines (15, 16) touche deux surfaces de base de même taille (17, 18) des deux portions voisines (15, 16).
